# EUROPEAN PATENT APPLICATION

(11) **EP 4 307 095 A1**
(43) Date of publication of application: **17.01.2024**
(21) Application number: 22784825.6
(22) Date of filing: 24.03.2022
(51) Int. Cl.: G06F 3/0482, G06F 3/0488, G06F 3/16, G06F 21/71, H04M 1/72469, H04M 1/03

(54) **ELECTRONIC DEVICE AND OPERATING METHOD THEREOF**

(30) Priority: 09.04.2021 KR 20210046629
(71) Applicant: Samsung Electronics Co., Ltd., Suwon-si, Gyeonggi-do 16677 (KR)
(72) Inventor: LEE, Jaebum, Suwon-si Gyeonggi-do 16677 (KR); LEE, Junho, Suwon-si Gyeonggi-do 16677 (KR)
(74) Representative: Gulde & Partner
(86) International application number: PCT/KR2022/004169
(87) International publication number: WO 2022/215915

(57) **Abstract**

An electronic device according to various embodiments of the present disclosure may comprise: a display module; a communication module; a processor; and a memory. The display module may comprise a touch sensor, a display, and a display driver. The processor may be operatively connected to the display module and the communication module. The memory may be operatively connected to the processor. The memory may store instructions which, when executed, enable the processor to: detect damage to the display; and when the damage to the display is detected, output a user interface on which a menu may be input even in a state in which the display is damaged.

## Description

### [Technical Field]

Various embodiments of the disclosure relate to an electronic device and an operating method thereof.

### [Background Art]

A display may be damaged when an external force is applied to an electronic device (e.g., a mobile phone). When a screen is not visible due to damage to the display, functions of the electronic device other than a call reception function cannot be used. There is a need to urgently use the electronic device even when the display is damaged, but a method capable of using a function of an electronic device when a display is damaged has not been proposed.

### [Disclosure of Invention]

### [Technical Problem]

There is a need to urgently use a function (e.g., a call function and/or a message sending/receiving function) of an electronic device even when a display of the electronic device is damaged, but a method capable of providing a function of an electronic device when a display is damaged has not been provided.

The technical subjects of an electronic device according to embodiments of the disclosure are to provide a device capable of executing functions of an electronic device when a display is damaged, and an operation method thereof.

The technical subjects pursued in the disclosure may not be limited to the above mentioned technical subjects, and other technical subjects which are not mentioned may be clearly understood, through the following descriptions, by those skilled in the art to which the disclosure pertains.

### [Solution to Problem]

An electronic device according to various embodiments of the disclosure may include a display module, a communication module, a processor, and a memory. The display module may include a touch sensor, a display, and a display driver. The processor may be operatively connected to the display module and the communication module. The memory may be operatively connected to the processor. The memory may store instructions which, when executed, cause the processor to detect damage to the display, and when the damage to the display is detected, output a user interface through which a menu can be input even in a state in which the display is damaged.

An electronic device according to various embodiments of the disclosure may include a display module, a communication module, a processor, and a memory. The display module may include a touch sensor, a display, and a display driver. The processor may be operatively connected to the display module and the communication module. The memory may be operatively connected to the processor. The memory may store instructions which, when executed, cause the processor to detect damage to the display, when the damage to the display is detected, identify whether any other previously connected electronic device exists, when any other previously connected electronic device exists, connect to the other previously connected electronic device, and output a user interface, through which a menu can be input, to a display of the other previously connected electronic device.

### [Advantageous Effects of Invention]

An electronic device according to various embodiments of the disclosure can detect damage to a display and operate in an emergency use mode, so as to execute all or some functions of the electronic device even when the display is damaged.

In addition to this, various effects identified directly or indirectly through this document can be provided.

### [Brief Description of Drawings]

FIG. 1 is a block diagram of an electronic device in a network environment according to various embodiments;
FIG. 2 is a block diagram of an electronic device according to various embodiments of the disclosure;
FIG. 3 illustrates an example of detecting damage to a display;
FIG. 4 illustrates an operating method according to an emergency use mode of an electronic device according to an embodiment of the disclosure;
FIG. 5A illustrates an example of displaying a user interface for continued use of an electronic device on a screen when a part of a display is damaged;
FIG. 5B illustrates an example of displaying a user interface for continued use of an electronic device on a screen when a part of a display is damaged;
FIG. 5C illustrates an example of displaying a user interface for continued use of an electronic device on a screen when a part of a display is damaged;
FIG. 5D illustrates an example of displaying a user interface for continued use of an electronic device on a screen when a part of a display is damaged;
FIG. 5E illustrates an example of displaying a user interface for continued use of an electronic device on a screen when a part of a display is damaged;
FIG. 6A illustrates an example of a method for guiding continued use of an electronic device;
FIG. 6B illustrates an example of a method for guiding continued use of an electronic device;
FIG. 7A illustrates an operating method according to an emergency use mode of an electronic device according to an embodiment of the disclosure;
FIG. 7B illustrates an example in which an electronic device is connected to any other previously connected electronic device;
FIG. 8 illustrates an operating method according to an emergency use mode of an electronic device according to an embodiment of the disclosure;
FIG. 9A illustrates an example of dividing an entire area (e.g., a screen) of a display into a plurality of areas in an emergency use mode of an electronic device;
FIG. 9B illustrates an example of displaying a touch area on a screen of a display;
FIG. 9C illustrates an example of unlocking an electronic device by recognizing a lock pattern through a touch area displayed on a screen of a display;
FIG. 9D illustrates an example of unlocking an electronic device by recognizing a password through a touch area displayed on a screen of a display; and
FIG. 10 illustrates an example of backing up data of an electronic device by connecting a wired cable to the electronic device.

### [Mode for the Invention]

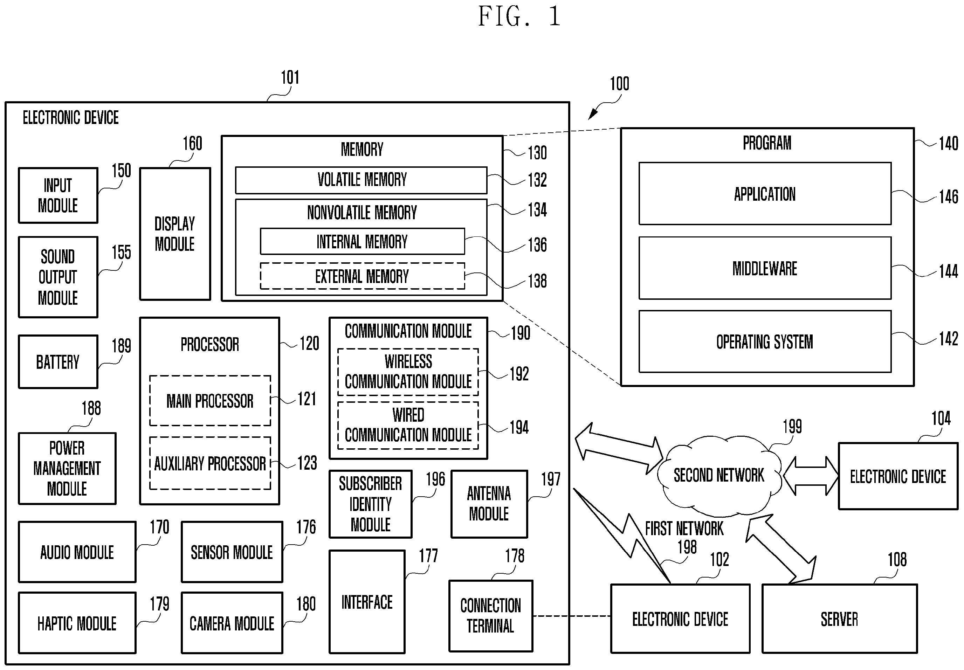

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

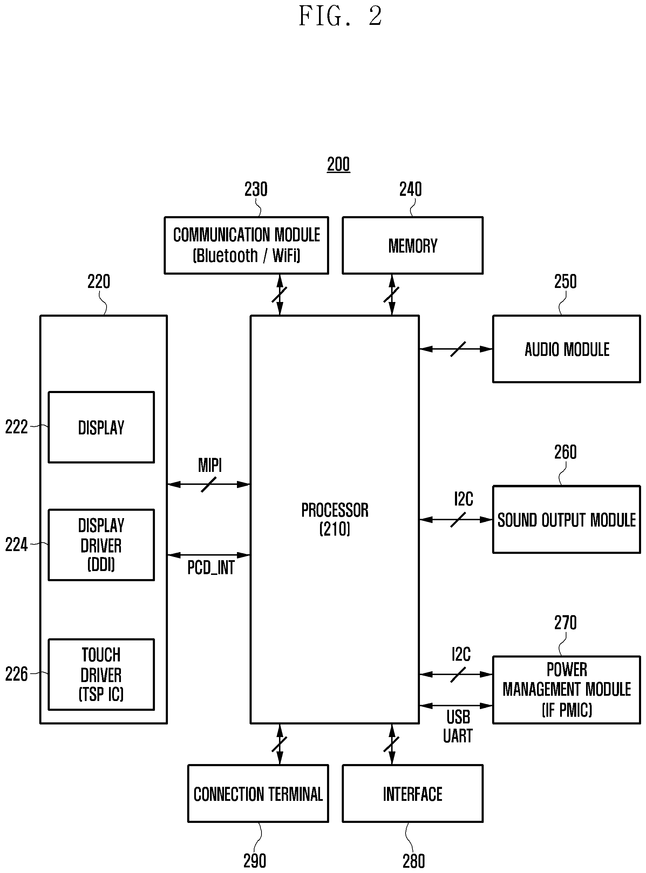

FIG. 2 is a block diagram of an electronic device according to various embodiments of the disclosure.

Referring to FIG. 2, an electronic device 200 according to various embodiments of the disclosure may include a processor 210 (e.g., the processor 120 of FIG. 1), a display module 220 (e.g., the display module 160 of FIG. 1), a communication module 230 (e.g., the communication module 190 of FIG. 1), a memory 240 (e.g., the memory 130 of FIG. 1), an audio module 250 (e.g., the audio module 170 of FIG. 1), a sound output device 260 (e.g., the sound output module 155 of FIG. 1), a power management module 270 (e.g., the power management module 188 of FIG. 1), an interface 280 (e.g., the interface 177 of FIG. 1), and a connection terminal 290 (e.g., the connection terminal 178 of FIG. 1). The processor 210 may control operations of the display module 220, the communication module 230, the memory 240, the audio module 250, the sound output module 260, and the power management module 270.

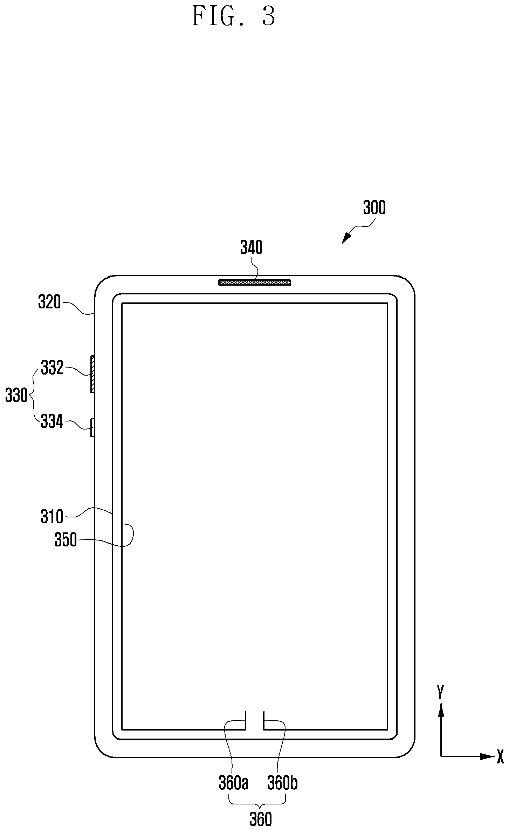

The processor 210 may receive, from the display module 220, a panel crack detection (PCD) interrupt (INT) signal (e.g., a panel crack detection pattern 350 (PCD) of FIG. 3) or an MIPI signal including information on panel crack detection. The processor 210 may detect damage to a display 222 by analyzing the panel crack detection pattern 350 or the MIPI signal including the information on panel crack detection. The processor 210 may operate in an emergency use mode so that all or some functions (e.g., attempting a call, checking a call history, sending/receiving a message, and checking a message) of the electronic device 200 can be used even when the display 222 is damaged.

The display module 220 may include a touch sensor configured to detect a touch or a pressure sensor configured to measure the intensity of force generated by the touch. The display module 220 may include the display 222, a display driver 224, and a touch driver 226.

The communication module 230 may include a wireless communication module (e.g., the wireless communication module 192 of FIG. 1) and a wired communication module (e.g., the wired communication module 194 of FIG. 1). The wireless communication module may include a cellular communication module, a local area wireless communication module, or a GNSS communication module. The wired communication module may include a LAN communication module or a power line communication module. The communication module 230 may communicate with another external electronic device through a first network (e.g., a local area communication network such as Bluetooth, wireless fidelity (Wi-Fi) direct, or infrared data association (IrDA)). The communication module 230 may communicate with another external electronic device through a second network (e.g., a telecommunications network such as a legacy cellular network, a 5G network, a next-generation communication network, the Internet, or a computer network (e.g., a LAN or a WAN)).

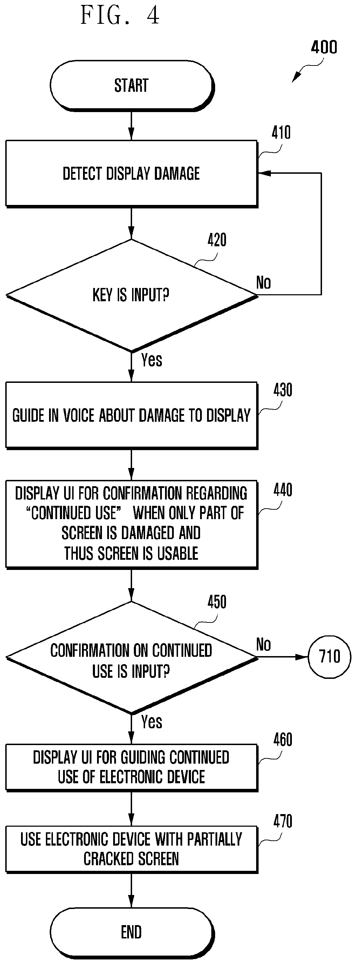

The memory 240 may store various data used by the processor 210 of the electronic device 200. The data may include, for example, input data or output data for software (e.g., a program) and a command related thereto. The memory 240 may store instructions that cause the processor 210 to perform at least some of the operations shown in FIGS. 4, 7A, and 8.

The audio module 250 may process an analog signal input through an input module (e.g., the input module 150 of FIG. 1) (e.g., a microphone or a headset) and convert the analog signal into a digital signal. The audio module 250 may convert a digital signal into an analog signal and output the converted analog signal to the sound output module 260.

The sound output module 260 may output an analog signal input by the audio module 250 through a sound output device (e.g., a speaker or a headphone).

The power management module 270 may include a power management integrated circuit (PMIC), and manage power supplied to the electronic device 200. The power management module 270 may protect the electronic device 200 from overvoltage through an overvoltage protection (OVP) function.

The interface 280 may support a designated communication protocol so that the electronic device 200 can be connected to another electronic device by wire or wirelessly. The interface 280 may include a high definition multimedia interface (HDMI), a universal serial bus (USB) interface, an SD card interface, and/or an audio interface.

The connection terminal 290 may include a connector capable of physically connecting the electronic device 200 to another electronic device. The connection terminal 290 may include an HDMI connector, a USB connector, an SD card connector, or an audio connector (e.g., a headphone connector).

FIG. 3 illustrates an example of detecting damage to a display.

Referring to FIGS. 2 and 3, when a display 310 is damaged, the entire of a screen may be damaged or only a part of the screen may be damaged. When a partial area of the display 310 is damaged, a function of the electronic device 300 may be used by using a non-damaged area. When the entire screen of the display 310 is damaged, restrictions may occur in using the screen to provide information of the electronic device 300 or control the electronic device 300. According to the disclosure, when a partial area of the display 310 is damaged or the entire screen is damaged, the electronic device operates in an emergency use mode so that a function of the electronic device 300 can be performed.

The electronic device 300 may include a housing 320, the display 310 disposed inside the housing 320, a plurality of key buttons 330, and a speaker 340. The plurality of key buttons 330 may include a volume key 332 for adjusting the volume of the electronic device 300 and a power key 334 for turning on/off the power of the electronic device 300. In addition, the inner space of the housing 320 may include the display driver 224 and the touch driver 226 of the display module 220, the communication module 230, the memory 240, the audio module 250, the sound output module 260, the power management module 270, the interface 280, and the connection terminal 290, which are shown in FIG. 2.

According to an embodiment, the processor 210 may receive, from the display module 220, a panel crack detection (PCD) interrupt (INT) signal 350 (hereinafter, referred to as a "panel crack detection interrupt (PCD_INT) signal") or an MIPI signal including information on panel crack detection.

The display 310 may output the panel crack detection pattern 350. The panel crack detection pattern 350 may be detected through crack detection interrupt (PCD_INT) signal identification pins 360.

As an embodiment, the crack detection interrupt (PCD_INT) signal identification pins 360 may include a first identification pin 360a (e.g., a PCD_INT bias power identification pin) and a second identification pin 360b (e.g., a PCD_INT signal identification pin). The first identification pin 360a (e.g., a PCD_INT bias power identification pin) may be connected to a PCD_INT bias power terminal to detect a change in a PCD_INT bias power. The second identification pin 360b (e.g., a PCD_INT signal identification pin) may be connected to a PCD_INT signal terminal to detect a change in a PCD_INT signal.

As an embodiment, a crack detection interrupt (PCD_INT) bias power may be connected in series.

If the panel crack detection pattern 350 is short-circuited, the PCD_INT bias power and the PCD_INT signal terminal are also disconnected.

If the PCD_INT bias power is short-circuited, a change occurs in the PCD_INT bias power, which can be detected through the first identification pin 360a (e.g., a PCD_INT bias power identification pin). If the PCD_INT signal terminal is short-circuited, a change occurs in the PCD_INT signal, which can be detected through the second identification pin 360b (e.g., a PCD_INT signal identification pin). As such, it is possible to detect whether a display crack has occurred by detecting a change in the PCD_INT bias power and/or the PCD_INT signal.

If a partial area or several areas of the display 310 are damaged, the crack detection interrupt (PCD_INT) bias power of the damaged part is opened and thus the phase of the crack detection interrupt (PCD_INT) signal 350 is changed.

For example, the crack detection interrupt (PCD_INT) signal 350 may be input to the processor 210. The processor 210 may analyze the crack detection interrupt (PCD_INT) signal 350 to detect cracking of the display 310.

For example, the crack detection interrupt (PCD_INT) signal 350 is input to the display driver 224, and the display driver 224 may analyze the crack detection interrupt (PCD_INT) signal 350 to generate information on panel crack detection. The information on panel crack detection may be included in an MIPI signal and thus provided to the processor 210.

When at least a part of the display 310 is damaged, the processor 210 may detect the damage to the display 310, based on a panel crack detection interrupt (PCD_INT) signal or an MIPI signal including information on panel crack detection.

For example, the processor 210 may detect that at least a part of the display 310 is damaged when the phase of the panel crack detection interrupt (PCD_INT) signal is changed. The processor 210 may analyze the change in the phase of the panel crack detection interrupt (PCD_INT) signal, so as to detect a damaged area among the entire area of the display 310.

For example, the processor 210 may analyze the information on panel crack detection included in the MIPI signal, so as to detect that at least a part of the display 310 is damaged.

For example, the processor 210 may operate in an emergency use mode when the damage to the display 310 is detected.

FIG. 4 is a diagram 400 illustrating an operating method according to an emergency use mode of an electronic device according to an embodiment of the disclosure.

Referring to FIGS. 2 to 4, in operation 410, damage to an electronic device (e.g., the electronic device 200 of FIG. 2 or the electronic device 300 of FIG. 3) may be detected.

According to an embodiment, when at least a part of a display (e.g., the display 310 of FIG. 3) is damaged, a processor (e.g., the processor 210 of FIG. 2) may detect the damage to the display 310, based on a panel crack detection (PCD) interrupt (INT) signal (hereinafter, referred to as a "panel crack detection interrupt (PCD_INT) signal").

For example, the processor 210 may identify a panel crack detection interrupt (PCD_INT) signal and detect that at least a part of the display 310 is damaged when the phase of the panel crack detection interrupt (PCD_INT) signal is changed.

For example, the processor 210 may analyze the change in the phase of the panel crack detection interrupt (PCD_INT) signal, so as to detect a damaged area among the entire area of the display 310.

For example, the processor 210 may operate in an emergency use mode when the damage to the display 310 is detected.

In operation 420, the processor 210 may determine whether an input of a power key (e.g., the power key 334 of FIG. 3) for turning on the power of the electronic device 300, that is, pressing of the power key 334 is recognized. If the input of the power key 334 is detected, the processor 210 may turn on the power of the electronic device 300.

The disclosure is not limited thereto, and when the power of the electronic device 300 is turned on before operation 420, the processor 210 may omit an operation of turning on the power of the electronic device 300.

In operation 430, the processor 210 may guide that the display 310 is damaged, through an audio output, by using the sound output module 260 and the speaker 340 so that a user can recognize the damage to the display 310. For example, the processor 210 may output a guide phrase "The display is damaged" through the speaker 340 as sound by using the sound output module 260. For example, the processor 210 may control a display driver (e.g., the display driver 224 of FIG. 2) so that the guide phrase "The display is damaged" is displayed on the display 310. For example, the processor 210 may display the guide phrase on the display 310 and output a guide voice by using the sound output module 260 and the speaker 340.

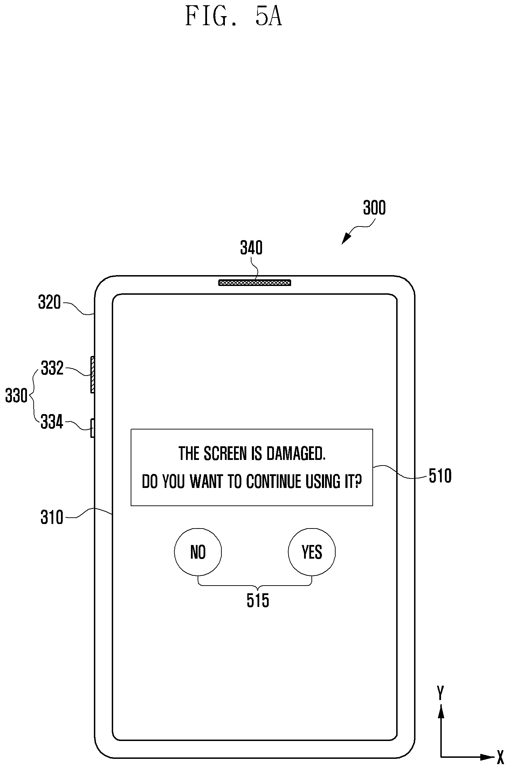

FIG. 5A illustrates an example of displaying a user interface for continued use of an electronic device on a screen when a part of a display is damaged.

Referring to FIGS. 4 and 5A, when only a partial area of the display 310 is damaged and thus the display is usable, in operation 440, a processor (e.g., the processor 210 of FIG. 2) may display, on the display 310, a user interface (UI) 510 for inquiring whether to "continue using". The processor 210 may detect a posture (e.g., a portrait mode or a landscape mode) of the electronic device 300, and allow the user interface 510 to be displayed according to the posture of the electronic device 300. FIG. 5A illustrates an example of displaying the user interface 510 when the electronic device 300 is in a portrait mode.

For example, the processor 210 may control a display driver (e.g., the display driver 224 of FIG. 2) to display, on the display 310, the user interface 510 for inquiring whether to "continue using" so that a user can continue using the electronic device 300. The display driver 224 may display the user interface 510 for inquiring whether to "continue using" on the display 310 in a portrait mode manner, based on the control of the processor 210. For example, the processor 210 may display the phrase "The screen is damaged. Do you want to continue using it?" on a screen of the display 310 by using the user interface 510.

In addition, when only a partial area of the display 310 is damaged and thus the display is usable, the processor 210 may control a display driver (e.g., the display driver 224 of FIG. 2) to display a user interface 515 for a user's confirmation regarding "continue using" so that the user can continue using the electronic device 300. The display driver 224 may display the user interface 515 for the user's confirmation regarding "continue using" on the display 310 in a portrait mode manner, based on the control of the processor 210. For example, the processor 210 may display selection buttons of "Yes" and "No" on the screen of the display 310 by using the user interface 515. The user may determine whether to continue using the electronic device 300 by selecting one of "Yes" and "No" displayed on the screen of the display 310 (e.g., by touching a selection button). The processor 210 may control a function of the electronic device 300, based on the user's selection using the user interface 515.

Even when a partial area of the display 310 is damaged, the processor 210 may display the user interfaces 510 and 515 in the central portion of the display 310 in a portrait mode manner so that the user interfaces 510 and 515 can be recognized. The disclosure is not limited thereto, positions where the user interfaces 510 and 515 are displayed on the display 310 may be changed.

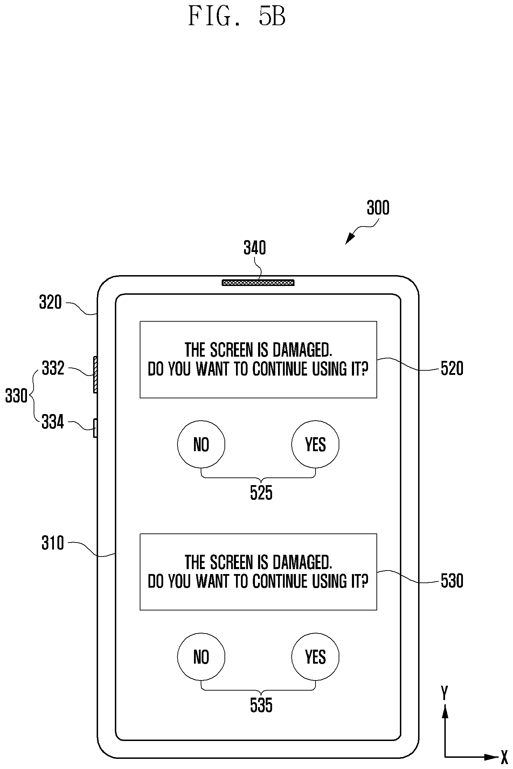

FIG. 5B illustrates an example of displaying a user interface for continued use of an electronic device on a screen when a part of a display is damaged.

Referring to FIGS. 4 and 5B, even when a partial area or several areas of the display 310 are damaged, the content of an inquiry about whether to "continue using" the electronic device 300 can be recognized.

In operation 440, a processor (e.g., the processor 210 of FIG. 2) may display a plurality of user interfaces 520 and 530 on the display 310. The processor 210 may detect a posture (e.g., a portrait mode or a landscape mode) of the electronic device 300, and allow the plurality of user interfaces 520 and 530 to be displayed according to the posture of the electronic device 300. FIG. 5B illustrates an example of displaying the plurality of user interfaces 520 and 530 when the electronic device 300 is in a portrait mode.

For example, the processor 210 may control a display driver (e.g., the display driver 224 of FIG. 2) to display, on the display 310, the plurality of user interfaces 520 and 530 for inquiring whether to "continue using" so that a user can continue using the electronic device 300. The display driver 224 may display the plurality of user interfaces 520 and 530 for inquiring whether to "continue using" on the display 310 in a portrait mode manner, based on the control of the processor 210. The plurality of user interfaces 520 and 530 may display the same content, but may have different positions where the user interfaces are displayed on the display 310. The processor 210 may allow the plurality of user interfaces 520 and 530 to be divided and displayed on an upper portion and a lower portion of a screen of the display 310 with reference to a first direction (e.g., the Y-axis direction). For example, the processor 210 may display the phrase "The screen is damaged. Do you want to continue using it?" on the screen of the display 310 by using the plurality of user interface 520 and 530.

In addition, the processor 210 may control a display driver (e.g., the display driver 224 of FIG. 2) to display a plurality of user interfaces 525 and 535 for confirmation of "continue using" so that "continue using" the electronic device 300 can be confirmed even when a partial area or several areas of the display 310 are damaged. The display driver 224 may display the plurality of user interfaces 525 and 535 for confirmation of "continue using" on the display 310 in a portrait mode manner, based on the control of the processor 210. For example, the processor 210 may display selection buttons of "Yes" and "No" on the screen of the display 310 by using the plurality of user interfaces 525 and 535. The plurality of user interfaces 525 and 535 may display the same content, but may have different positions where the user interfaces are displayed on the display 310. The processor 210 may allow the plurality of user interfaces 525 and 535 to be divided and displayed on the upper portion and the lower portion of the screen of the display 310 with reference to the first direction (e.g., the Y-axis direction). The user may determine whether to continue using the electronic device 300 by selecting one of "Yes" and "No" displayed on the screen of the display 310 (e.g., by touching a selection button).

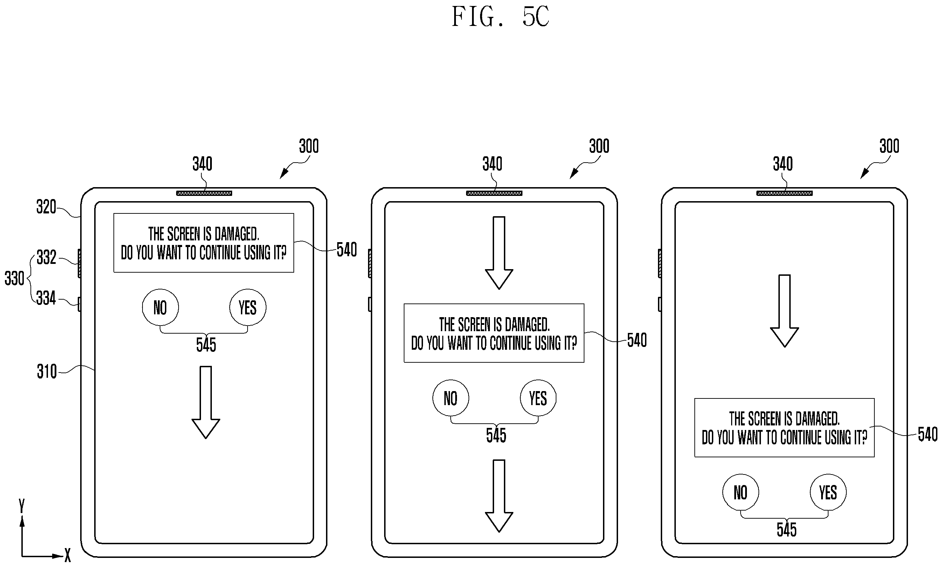

FIG. 5C illustrates an example of displaying a user interface for continued use of an electronic device on a screen when a part of a display is damaged.

Referring to FIGS. 4 and 5C, even when a partial area or several areas of the display 310 are damaged, the content of an inquiry about whether to "continue using" the electronic device 300 can be recognized.

In operation 440, a processor (e.g., the processor 210 of FIG. 2) may display a user interface 540 on the display 310. The processor 210 may detect a posture (e.g., a portrait mode or a landscape mode) of the electronic device 300, and allow the user interface 540 to be displayed according to the posture of the electronic device 300. FIG. 5C illustrates an example of displaying the user interface 540 when the electronic device 300 is in a portrait mode.

For example, the processor 210 may control a display driver (e.g., the display driver 224 of FIG. 2) to display, on the display 310, the user interface 540 for inquiring whether to "continue using" so that a user can continue using the electronic device 300. The display driver 224 may display the user interface 540 for inquiring whether to "continue using" on the display 310 in a portrait mode manner, based on the control of the processor 210. For example, the processor 210 may display the phrase "The screen is damaged. Do you want to continue using it?" on a screen of the display 310 by using the user interface 540.

For example, when several areas of the display 310 are damaged and the user interface 540 is displayed in the damaged areas of the display 310, the user may not be able to recognize the content of the user interface 540. The electronic device 300 of the disclosure may allow the user interface 540 to be displayed while the user interface moves in a sliding manner on the display 310 so that the content of the user interface 540 can be recognized even when several areas of the display 310 are damaged.

For example, the processor 210 may allow the user interface 540 to be displayed while the user interface moves from the upper side to the lower side and/or from the lower side to the upper side with reference to a first direction (e.g., the Y-axis direction). The processor 210 may adjust a moving speed of the user interface 540 so that a guide phrase displayed on the user interface 540 can be clearly recognized. For example, the processor 210 may allow the user interface 540 to be displayed while the user interface moves from the upper side of the display 310 to the lower side thereof and/or from the lower side to the upper side for a predetermined period of time (e.g., 5 seconds, 10 seconds, 15 seconds, 30 seconds, 45 seconds, or 60 seconds).

In addition, the processor 210 may control a display driver (e.g., the display driver 224 of FIG. 2) to display a user interface 545 for a user's confirmation regarding "continue using" so that the user can continue using the electronic device 300 even when a partial area or several areas of the display 310 are damaged. The display driver 224 may display the user interface 545 for the user's confirmation regarding "continue using" on the display 310 in a portrait mode manner, based on the control of the processor 210. For example, the processor 210 may display selection buttons of "Yes" and "No" on the screen of the display 310 in a portrait mode manner by using the user interface 545.

The electronic device 300 of the disclosure may allow the user interface 545 to be displayed while the user interface moves in a sliding manner on the display 310 so that the content of the user interface 545 can be recognized even when several areas of the display 310 are damaged.

For example, the processor 210 may allow the user interface 545 to be displayed while the user interface moves from the upper side to the lower side and/or from the lower side to the upper side with reference to the first direction (e.g., the Y-axis direction). The processor 210 may adjust a moving speed of the user interface 545 so that the content of "Yes" and "No" of the selection buttons displayed on the user interface 545 can be clearly recognized. For example, the processor 210 may allow the user interface 545 to be displayed while the user interface moves from the upper side of the display 310 to the lower side thereof and/or from the lower side to the upper side for a predetermined period of time (e.g., 5 seconds, 10 seconds, 15 seconds, 30 seconds, 45 seconds, or 60 seconds).

The user may determine whether to continue using the electronic device 300 by selecting one of "Yes" and "No" displayed on the screen of the display 310 (e.g., by touching a selection button). The processor 210 may control a function of the electronic device 300, based on the user's selection using the user interface 545.

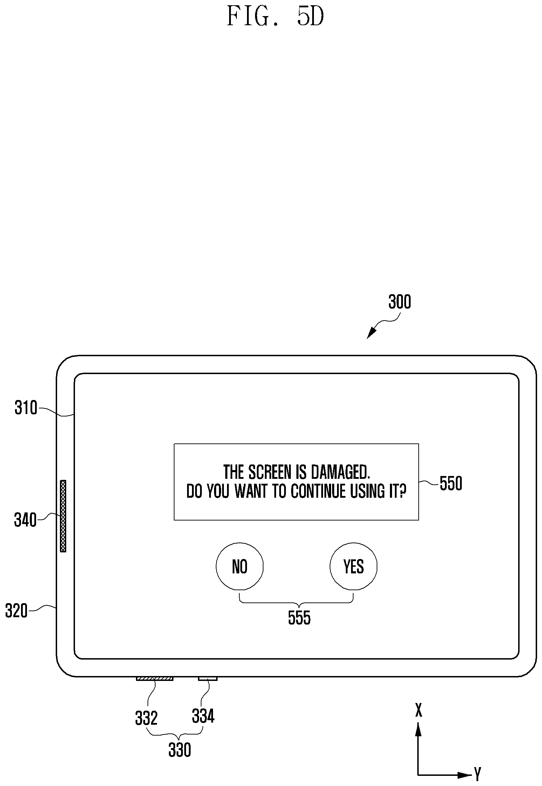

FIG. 5D illustrates an example of displaying a user interface for continued use of an electronic device on a screen when a part of a display is damaged.

Referring to FIGS. 4 and 5D, when only a partial area of the display 310 is damaged and thus the display is usable, in operation 440, a processor (e.g., the processor 210 of FIG. 2) may display, on the display 310, a user interface 550 for inquiring whether to "continue using". The processor 210 may detect a posture (e.g., a portrait mode or a landscape mode) of the electronic device 300, and allow the user interface 550 to be displayed according to the posture of the electronic device 300. FIG. 5D illustrates an example of displaying the user interface 550 when the electronic device 300 is in a landscape mode.

For example, the processor 210 may control a display driver (e.g., the display driver 224 of FIG. 2) to display, on the display 310, the user interface 550 for inquiring whether to "continue using" so that a user can continue using the electronic device 300. The display driver 224 may display the user interface 550 for inquiring whether to "continue using" on the display 310 in a landscape mode manner, based on the control of the processor 210. For example, the processor 210 may display the phrase "The screen is damaged. Do you want to continue using it?" on a screen of the display 310 by using the user interface 550.

In addition, when only a partial area of the display 310 is damaged and thus the display is usable, the processor 210 may control a display driver (e.g., the display driver 224 of FIG. 2) to display a user interface 555 for a user's confirmation regarding "continue using" so that the user can continue using the electronic device 300. The display driver 224 may display the user interface 555 for the user's confirmation regarding "continue using" on the display 310 in a landscape mode manner, based on the control of the processor 210. For example, the processor 210 may display selection buttons of "Yes" and "No" on the screen of the display 310 by using the user interface 555. The user may determine whether to continue using the electronic device 300 by selecting one of "Yes" and "No" displayed on the screen of the display 310 (e.g., by touching a selection button). The processor 210 may control a function of the electronic device 300, based on the user's selection using the user interface 555.

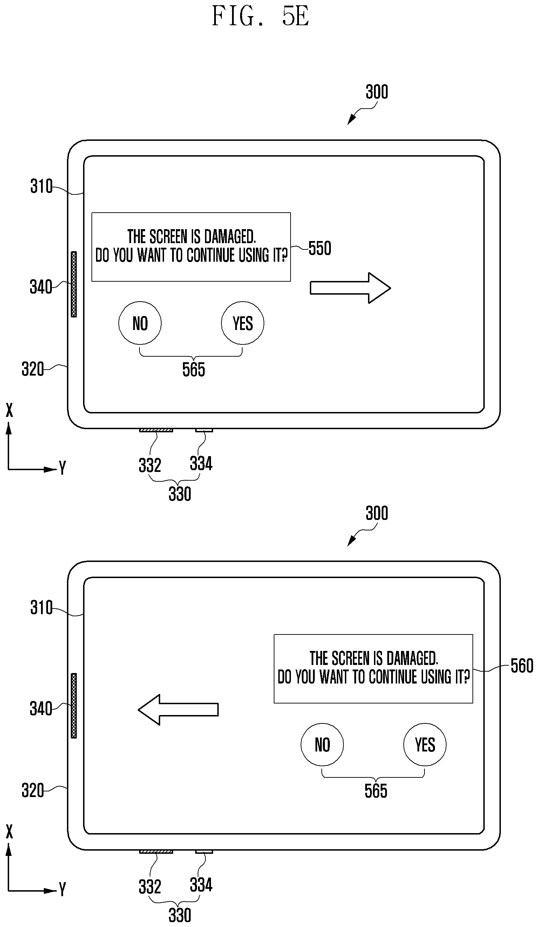

FIG. 5E illustrates an example of displaying a user interface for continued use of an electronic device on a screen when a part of a display is damaged.

Referring to FIGS. 4 and 5E, even when a partial area or several areas of the display 310 are damaged, the content of an inquiry about whether to "continue using" the electronic device 300 can be recognized.

In operation 440, a processor (e.g., the processor 210 of FIG. 2) may display a user interface 560 on the display 310. The processor 210 may detect a posture (e.g., a portrait mode or a landscape mode) of the electronic device 300, and allow the user interface 560 to be displayed according to the posture of the electronic device 300. FIG. 5E illustrates an example of displaying the user interface 560 when the electronic device 300 is in a landscape mode.

For example, the processor 210 may control a display driver (e.g., the display driver 224 of FIG. 2) to display, on the display 310, the user interface 560 for inquiring whether to "continue using" so that a user can continue using the electronic device 300. The display driver 224 may display the user interface 560 for inquiring whether to "continue using" on the display 310 in a landscape mode manner, based on the control of the processor 210. For example, the processor 210 may display the phrase "The screen is damaged. Do you want to continue using it?" on a screen of the display 310 by using the user interface 560.

For example, when several areas of the display 310 are damaged and the user interface 560 is displayed on the damaged areas of the display 310, the user may not be able to recognize the content of the user interface 560. The electronic device 300 of the disclosure may allow the user interface 560 to be displayed while the user interface moves in a sliding manner on the display 310 so that the content of the user interface 560 can be recognized even when several areas of the display 310 are damaged.

For example, the processor 210 may allow the user interface 560 to be displayed while the user interface moves from one side (e.g., the left side) to the other side (e.g., the right side) and/or from the other side (e.g., the right side) to one side (e.g., the left side) with reference to a second direction (e.g., the X-axis direction). The processor 210 may adjust a moving speed of the user interface 560 so that a guide phrase displayed on the user interface 560 can be clearly recognized. For example, the processor 210 may allow the user interface 560 to be displayed while the user interface moves from one side (e.g., the left side) of the display 310 to the other side (e.g., the right side) thereof and/or from the other side (e.g., the right side) to one side (e.g., the left side) for a predetermined period of time (e.g., 5 seconds, 10 seconds, 15 seconds, 30 seconds, 45 seconds, or 60 seconds).

In addition, the processor 210 may control a display driver (e.g., the display driver 224 of FIG. 2) to display a user interface 565 for a user's confirmation regarding "continue using" so that the user can continue using the electronic device 300 even when a partial area or several areas of the display 310 are damaged. The display driver 224 may display the user interface 565 for the user's confirmation regarding "continue using" on the display 310 in a landscape mode manner, based on the control of the processor 210. For example, the processor 210 may display selection buttons of "Yes" and "No" on the screen of the display 310 in a landscape mode manner by using the user interface 565.

The electronic device 300 of the disclosure may allow the user interface 565 to be displayed while the user interface moves in a sliding manner on the display 310 so that the content of the user interface 565 can be recognized even when several areas of the display 310 are damaged.

For example, the processor 210 may allow the user interface 565 to be displayed while the user interface moves from one side (e.g., the left side) to the other side (e.g., the right side) and/or from the other side (e.g., the right side) to one side (e.g., the left side) with reference to the second direction (e.g., the X-axis direction). The processor 210 may adjust a moving speed of the user interface 565 so that the content of "Yes" and "No" of the selection buttons displayed on the user interface 565 can be clearly recognized. For example, the processor 210 may allow the user interface 565 to be displayed while the user interface moves from one side (e.g., the left side) of the display 310 to the other side (e.g., the right side) thereof and/or from the other side (e.g., the right side) to one side (e.g., the left side) for a predetermined period of time (e.g., 5 seconds, 10 seconds, 15 seconds, 30 seconds, 45 seconds, or 60 seconds).

The user may determine whether to continue using the electronic device 300 by selecting one of "Yes" and "No" displayed on the screen of the display 310 (e.g., by touching a selection button). The processor 210 may control a function of the electronic device 300, based on the user's selection using the user interface 565.

Referring again to FIG. 4, in operation 450, a processor (e.g., the processor 210 of FIG. 2) may determine whether a confirmation regarding continued use of the electronic device 300 is input. As a result of the determination in operation 450, when the confirmation regarding continued use of the electronic device 300 is input, the processor 210 may perform an operation according to continued use or stop of use of the electronic device 300, based on the user's selection of "Yes" or "No" (e.g., a touch of the selection button of "Yes" or "No" displayed on the screen).

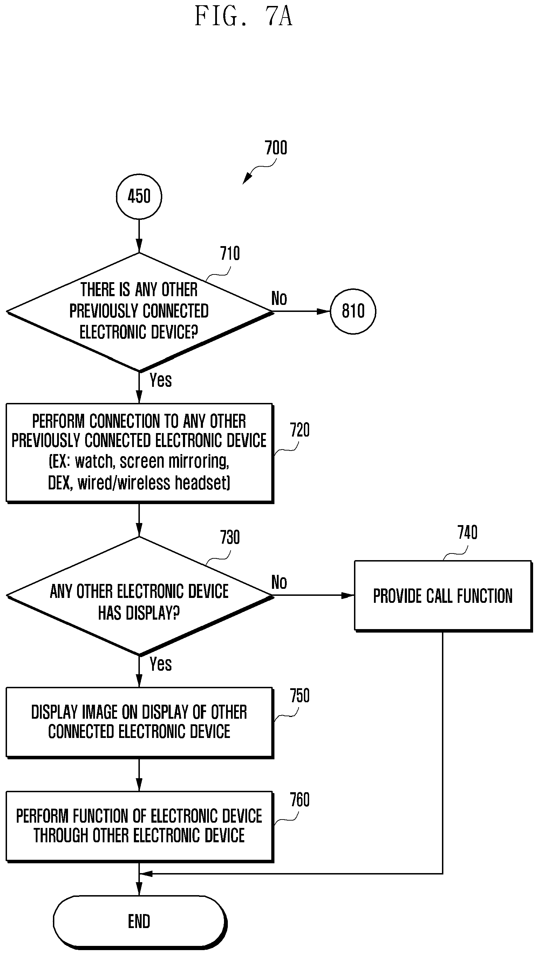

For example, the processor 210 may configure a waiting time (e.g., 3 seconds, 5 seconds, 10 seconds, 15 seconds, 30 seconds, or 60 seconds) for a confirmation regarding continued use of the electronic device 300. When the confirmation regarding continued use of the electronic device 300 is not input for a predetermined period of time (e.g., 3 seconds, 5 seconds, 10 seconds, 15 seconds, 30 seconds, or 60 seconds), the processor 210 may determine that it is difficult for a user to recognize the screen of the display 310 of the electronic device 300 or that a user does not want to continue using the electronic device 300. The processor 210 may perform operation 710 of FIG. 7A when the confirmation regarding continued use of the electronic device 300 is not input for a predetermined period of time (e.g., 3 seconds, 5 seconds, 10 seconds, 15 seconds, 30 seconds, or 60 seconds).

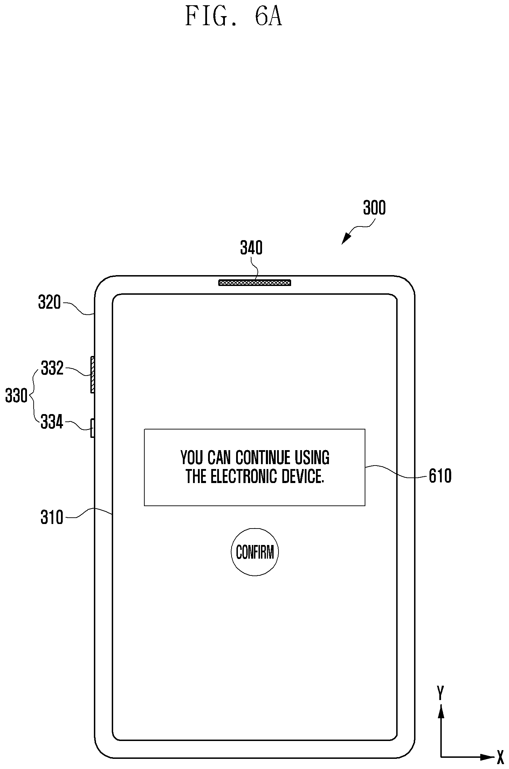

FIG. 6A illustrates an example of a method for guiding continued use of an electronic device.

Referring to FIGS. 4 and 6A, as a result of the determination in operation 450, when the confirmation regarding continued use of the electronic device 300 is input, in operation 460, a processor (e.g., the processor 210 of FIG. 2) may display a user interface 610 for guiding continued use of the electronic device 300 on a screen of the display 310. The processor 210 may detect a posture (e.g., a portrait mode or a landscape mode) of the electronic device 300, and allow the user interface 610 to be displayed according to the posture of the electronic device 300. FIG. 6A illustrates an example of displaying the user interface 610 when the electronic device 300 is in a portrait mode.

According to an example, the processor 210 may control a display driver (e.g., the display driver 224 of FIG. 2) to display, on the display 310, the user interface 610 for informing that he/she can continue using the electronic device 300. The display driver 224 may display, on the display 310, the user interface 610 for informing that he/she can continue using the electronic device 300, based on the control of the processor 210. For example, the processor 210 may display the phrase "You can continue using the electronic device." on the screen of the display 310 by using the user interface 610. The processor 210 may display the user interface 610 in the central portion of the display 310 so that the user interface 610 can be recognized even when a partial area of the display 310 is damaged. The disclosure is not limited thereto, a position where the user interface 610 is displayed on the display 310 may be changed.

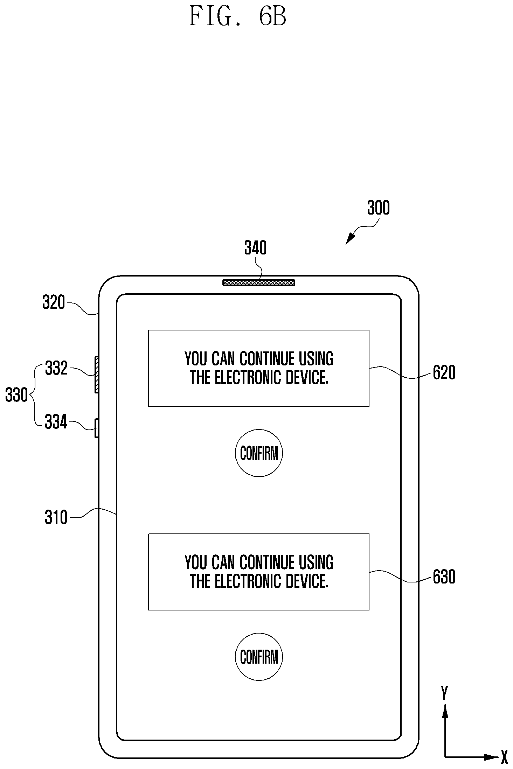

FIG. 6B illustrates an example of a method for guiding continued use of an electronic device.

FIGS. 4 and 6B, in operation 460, a processor (e.g., the processor 210 of FIG. 2) may display a plurality of user interfaces 620 and 630 for guiding continued use of the electronic device 300 on a screen of the display 310. The processor 210 may detect a posture (e.g., a portrait mode or a landscape mode) of the electronic device 300, and allow the plurality of user interfaces 620 and 630 to be displayed according to the posture of the electronic device 300. FIG. 6B illustrates an example of displaying the plurality of user interfaces 620 and 630 when the electronic device 300 is in a portrait mode.

According to an example, the processor 210 may control a display driver (e.g., the display driver 224 of FIG. 2) to display, on the display 310, the plurality of user interfaces 620 and 630 for informing that he/she can continue using the electronic device 300. The display driver 224 may display, on the display 310, the plurality of user interfaces 620 and 630 for informing that he/she can continue using the electronic device 300, based on the control of the processor 210. For example, the processor 210 may display the phrase "You can continue using the electronic device." on the screen of the display 310 by using the user interfaces 620 and 630. The processor 210 may allow the plurality of user interfaces 620 and 630 to be divided and displayed on an upper portion and a lower portion of the screen of the display 310 with reference to a first direction (e.g., the Y-axis direction) so that the user interfaces 620 and 630 can be recognized even when a partial area or several areas of the display 310 are damaged. The plurality of user interfaces 620 and 630 may display the same content, but may have different positions where the user interfaces are displayed on the display 310.

Referring again to FIG. 4, after displaying, on the display 310, the user interface 610 for informing that he/she can continue using the electronic device 300, in operation 470, the processor 210 may perform a function of the electronic device 300 in a state in which the screen of the display 310 is partially cracked. That is, the processor may enable the electronic device 300 to be used in a state in which the screen of the display 310 is partially cracked.

As a result of the determination in operation 450, when the confirmation regarding continued use of the electronic device 300 is not input, the processor 210 may perform operation 710 of FIG. 7A.

The operations shown in FIG. 4 may be performed by a processor (e.g., the processor 120 of FIG. 1 or the processor 210 of FIG. 2) or a separate control circuit. For example, a memory (e.g., the memory 130 of FIG. 1 or the memory 240 of FIG. 2) of the electronic device may store instructions that, when executed, cause the processor 120 or 210 (or a control device) to perform at least some of the operations shown in FIG. 4.

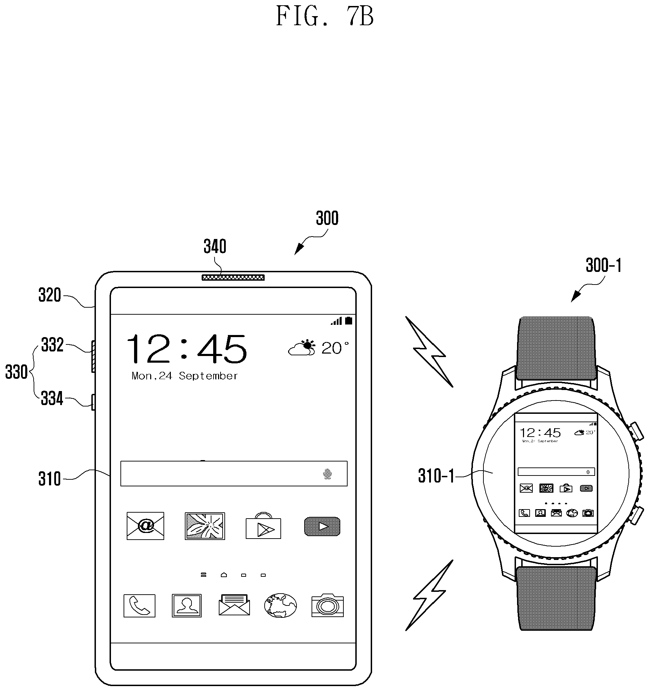

FIG. 7A is a diagram 700 illustrating an operating method according to an emergency use mode of an electronic device according to an embodiment of the disclosure. FIG. 7B illustrates an example in which an electronic device is connected to any other previously connected electronic device.

Referring to FIGS. 7A and 7B, in operation 710, a processor (e.g., the processor 210 of FIG. 2) may determine whether there is any other electronic device 300-1 (e.g., a watch, screen mirroring, DEX, or wired/wireless headset) previously connected to the electronic device 300.

When there is the other electronic device 300-1 previously connected to the electronic device 300, in operation 720, the processor 210 may perform a connection to the other previously connected electronic device 300-1.

For example, the electronic device 300 and the other electronic device 300-1 may be connected using wireless communication. For example, the electronic device 300 and the other electronic device 300-1 may be connected using wired communication.

For example, when there are a plurality of other electronic devices 300-1 previously connected to the electronic device 300, the processor 210 may connect to any other electronic device 300-1 among the plurality of other electronic devices 300-1. For example, when there are a plurality of other electronic devices 300-1 previously connected to the electronic device 300, the processor 210 may connect to the plurality of other electronic devices 300-1.

In operation 730, the processor 210 may determine whether any other connected electronic device 300-1 has a display.

As an embodiment, when the other electronic device 300-1 does not have a display, in operation 740, the processor 210 may provide a call function through the other connected electronic device 300-1.

As an embodiment, when the other electronic device 300-1 does not have a display, in operation 740, the processor 210 may execute a voice command function (e.g., the Bixby function) to provide a call function through the other connected electronic device 300-1.

When the other electronic device 300-1 has a display, in operation 750, the processor 210 may display a screen by using a display 310-1 of the other connected electronic device 300-1. That is, an image to be displayed on the display 310 of the electronic device 300 may be displayed using the display 310-1 of the other electronic device 300-1. For example, an image may be displayed on the display 310 of the electronic device 300 and the display 310-1 of the other electronic device 300-1. For example, an image may not be displayed on the display 310 of the electronic device 300, and an image may be displayed on the display 310-1 of the other electronic device 300-1.

For example, the processor 210 may display a user interface, through which a screen lock pattern and/or a password can be input, through the display 310-1 of the other electronic device 300-1. The processor 210 may unlock the electronic device 300 through a screen lock pattern and/or a password input through the display 310-1 of the other electronic device 300-1.

In operation 760, the processor 210 may perform a function of the electronic device 300 through the other connected electronic device 300-1. An image displayed on the electronic device 300 is displayed on the display 310-1 of the other electronic device 300-1, and thus it is possible to use the electronic device 300 by using the screen displayed on the display 310-1 of the other electronic device 300-1.

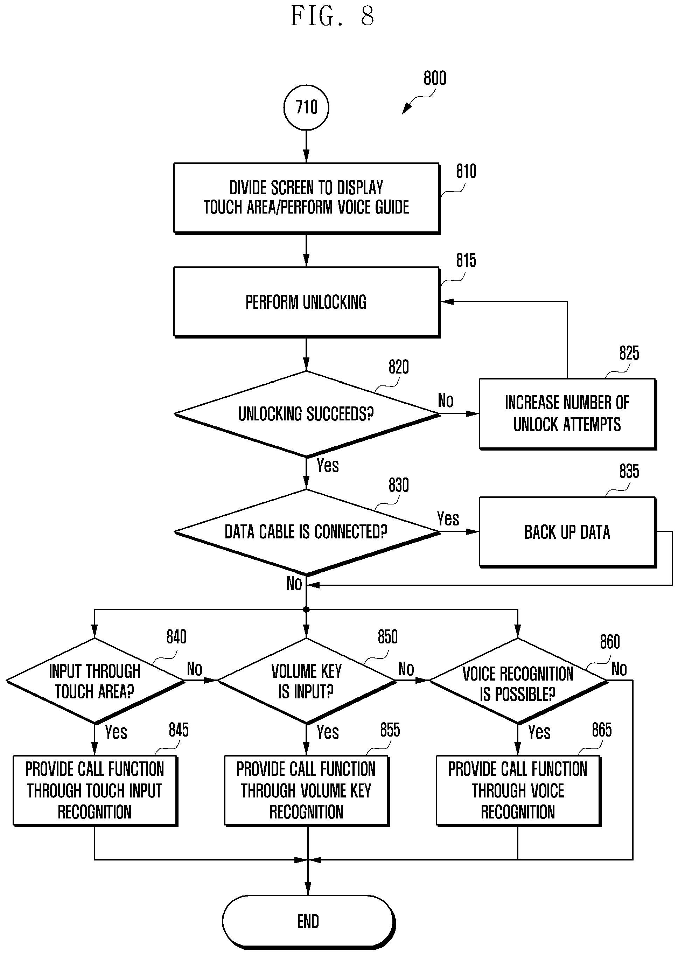

As a result of the determination in operation 710, when there is no other electronic device 300-1 previously connected to the electronic device 300, the processor 210 may perform operation 810 of FIG. 8.

The operations shown in FIG. 7 may be performed by a processor (e.g., the processor 120 of FIG. 1 or the processor 210 of FIG. 2) or a separate control circuit. For example, a memory (e.g., the memory 130 of FIG. 1 or the memory 240 of FIG. 2) of the electronic device may store instructions that, when executed, cause the processor 120 or 210 (or a control device) to perform at least some of the operations shown in FIG. 7.

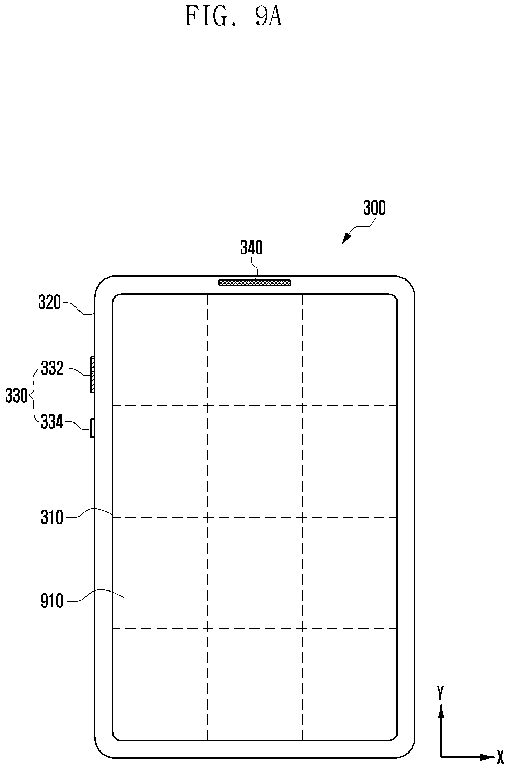

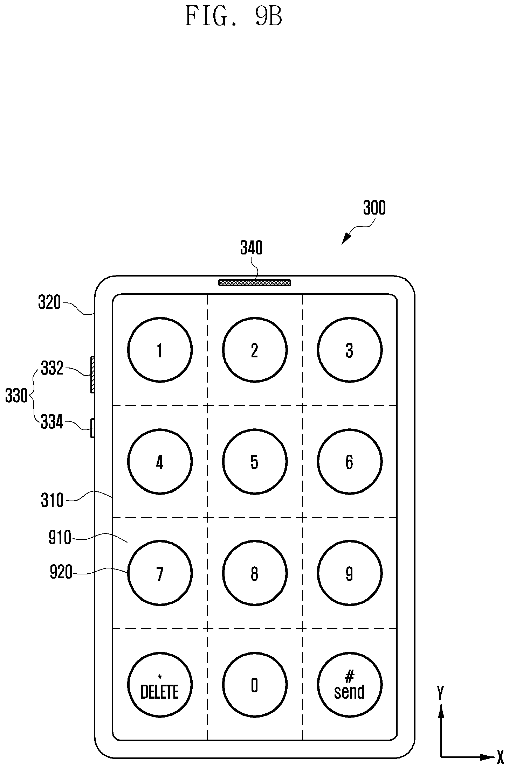

FIG. 8 illustrates an operating method according to an emergency use mode of an electronic device according to an embodiment of the disclosure. FIG. 9A illustrates an example of dividing an entire area (e.g., a screen) of a display into a plurality of areas in an emergency use mode of an electronic device. FIG. 9B illustrates an example of displaying a touch area on a screen of a display.

Referring to FIGS. 7B to 9B, when there is no other electronic device 300-1 previously connected to the electronic device 300, in operation 810, a processor (e.g., the processor 210 of FIG. 2) may divide an entire area (e.g., a screen) of the display 310 into a plurality of areas 910 (e.g., 12 areas). The processor 210 does not physically divide the entire area (e.g., a screen) of the display 310, but may logically divide the entire area (e.g., a screen) of the display 310 into the plurality of areas 910. FIG. 9A illustrates an example of dividing the entire area (e.g., a screen) of the display 310 into 12 areas.

For example, the processor 210 may display a touch area 920 in each of the plurality of areas 910 of the display 310. When several areas of the display 310 are damaged or a screen is not displayed in the entire area of the display 310, it may be difficult to recognize the touch area 920.

For example, the processor 210 may output audio so that a user can recognize the touch area 920 even when it is difficult for the user to recognize the touch area due to damage to the display 310. The processor 210 may guide, through audio, information on the entire area (e.g., a screen) of the display 310 being divided into the plurality of areas and the touch area 920 being disposed in each of the plurality of areas 910.

For example, the processor 210 may use a sound output module (e.g., the sound output module 260 of FIG. 2 and the speaker 340) to inform, through an audio output, that the entire area (e.g., a screen) of the display 310 is divided into 12 areas (e.g., the plurality of areas 910), and the touch area 920 is disposed in each of 12 areas (e.g., the plurality of areas 910).

For example, the processor 210 may arrange number buttons (e.g., 0 to 9) and function buttons (e.g., *, #, delete, and send) in the plurality of touch areas 920, and guide the arranged order and positions of the number buttons (e.g., 0 to 9) and the function buttons (e.g., *, #, delete, and send) through an audio output. In addition, the processor 210 may detect a touch input of the plurality of touch areas 920. If a user's touch on the plurality of touch areas 920 is detected, the processor 210 may guide information on number buttons (e.g., 0 to 9) or function buttons (e.g., *, #, delete, and send) of the touched touch areas 920 through an audio output.

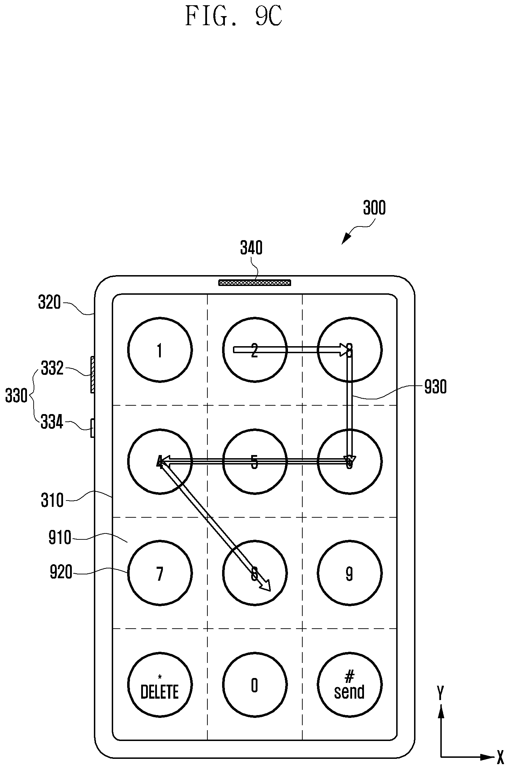

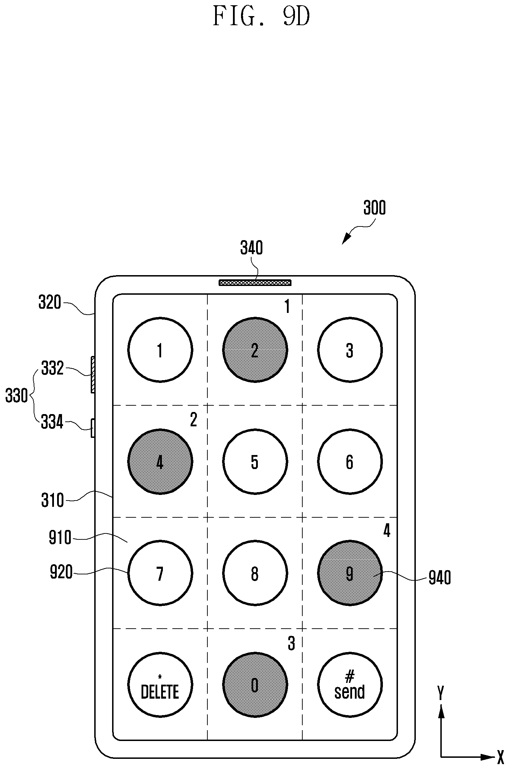

FIG. 9C illustrates an example of unlocking an electronic device by recognizing a lock pattern through a touch area displayed on a screen of a display. FIG. 9D illustrates an example of unlocking an electronic device by recognizing a password through a touch area displayed on a screen of a display.

Referring to FIGS. 8, 9C, and 9D, in operation 815, the processor 210 may unlock the electronic device 300, based on a user's touch input to number buttons (e.g., 0 to 9) and function buttons (e.g., *, #, delete, and send) of the touch areas 920.

As an embodiment, the processor 210 may compare a lock pattern 930 input through the number buttons (e.g., 0 to 9) and the function buttons (e.g., *, #, delete, and send) of the touch areas 920 with a preconfigured reference pattern, and unlock the electronic device 300, based on the comparison result of the lock pattern 930.

As an embodiment, the processor 210 may compare a password 940 (or a personal identification number (PIN)) input through the number buttons (e.g., 0 to 9) and the function buttons (e.g., *, #, delete, and send) of the touch areas 920 with a preconfigured reference number, and unlock the electronic device 300, based on the comparison result of the password 940 (or PIN).

In operation 820, the processor 210 may determine whether unlocking of the electronic device 300 succeeds. When unlocking of the electronic device 300 fails, in operation 825, the processor 210 may increase the number of unlock attempts (e.g., 10 times increase, 20 times increase, or 30 times increase), and allow unlocking in operation 815 to be performed again.

For example, the processor 210 may additionally provide 10, 20, or 30 times as the number of unlock attempts. For example, the processor 210 may additionally provide the same number of unlock attempts as an initially configured number of unlock attempts. For example, the processor 210 may additionally provide twice, three times, four times, or five times the initially configured number of unlock attempts.

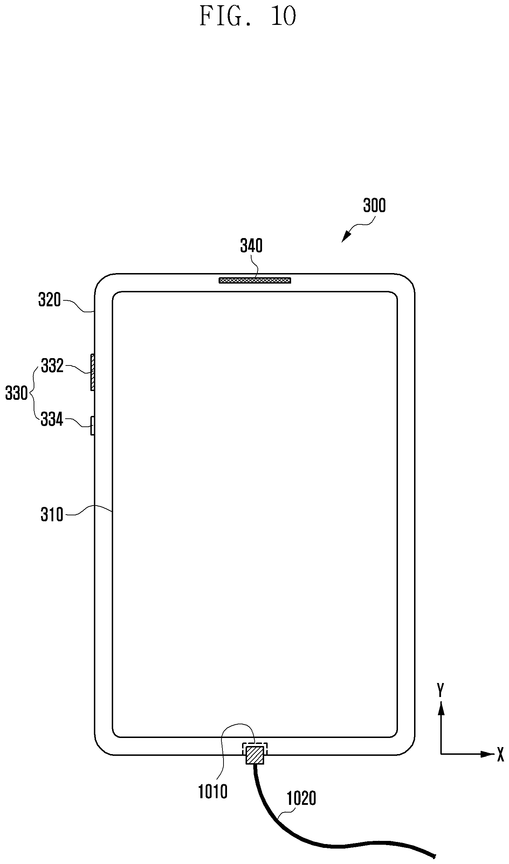

FIG. 10 illustrates an example of backing up data of an electronic device by connecting a wired cable to the electronic device.

Referring to FIGS. 8 and 10, when unlocking of the electronic device 300 succeeds, in operation 830, the processor 210 may determine whether a wired cable 1020 (e.g., a USB cable) is connected to a connection terminal 1010 (e.g., the connection terminal 178 of FIG. 1) of the electronic device 300.

When the wired cable 1020 is connected to the connection terminal 1010 of the electronic device 300, in operation 835, the processor 210 may back up data (e.g., a phone number, call history, text, picture file, video file, document file, etc.) stored in the electronic device 300 to any other electronic device (e.g., a memory) connected to the wired cable 1020.

In FIG. 8, determining whether the connection terminal 1010 and the wired cable 1020 are connected after successful unlocking of the electronic device 300 is illustrated and described as an example. The disclosure is not limited thereto, and it may be determined whether the connection terminal 1010 and the wired cable 1020 are connected in operation 830 before performing unlocking in operation 815. When the wired cable 1020 is connected to the connection terminal 1010 of the electronic device 300, the processor 210 may automatically unlock the electronic device 300 to back up data.

If the wired cable 1020 is not connected to the connection terminal 1010 of the electronic device 300, the processor 210 may sequentially perform operations 840, 850, and 860, or may perform operations 840, 850, and 860 in parallel.

Referring again to FIGS. 8 and 9B, in operation 840, the processor 210 may determine whether a selection (e.g., a touch) of number buttons (e.g., 0 to 9) and/or function buttons (e.g., *, #, delete, and send) is input through the touch areas 920.

If a selection (e.g., a touch) of the number buttons (e.g., 0 to 9) and/or the function buttons (e.g., *, #, delete, and send) is input through the touch areas 920, in operation 845, the processor 210 may perform a call function of the electronic device 300 by recognizing a touch input using the touch areas 920.

For example, if a selection (e.g., a touch) of the number buttons (e.g., 0 to 9) and/or the function buttons (e.g., *, #, delete, and send) is input through the touch areas 920, the processor 210 may output, through audio, an input content of the selection (e.g., a touch) of the number buttons (e.g., 0 to 9) and/or the function buttons (e.g., *, #, delete, and send) by using the sound output module 260 and the speaker 340.

If a selection (e.g., a touch) of the number buttons (e.g., 0 to 9) and/or the function buttons (e.g., *, #, delete, and send) is not input through the touch areas 920, in operation 850, the processor 210 may determine whether there is an input of the volume key 332.

If there is an input of the volume key 332, in operation 855, the processor 210 may recognize the input of the volume key 322 to provide a call history (e.g., a phone number, a name, and a last call time) and provide a call function.

For example, when a user presses the volume key 322, the processor 210 may output, through audio, an input content of an up/down key of the volume key 322 by using the sound output module 260 and the speaker 340. In addition, the processor 210 may analyze the existing call history when the user presses the volume key 322, and guide the call history (e.g., a phone number, a name, and a last call time) through an audio output by using the sound output module 260 and the speaker 340. The processor 210 may provide the call history (e.g., a phone number, a name, and a last call time) according to the user pressing the up/down key of the volume key 322, and thus the user may check the call history (e.g., a phone number, a name, and a last call time) and attempt a call.

If there is no input of the volume key 332, in operation 860, the processor 210 may determine whether the electronic device 300 enables voice recognition by using an audio module (e.g., the audio module 250 of FIG. 2). When the voice recognition of the electronic device 300 is possible, the processor 210 may recognize a voice command for requesting a call attempt of a user, and provide a call function according to the recognized voice command.

Referring to FIG. 8, it has been described that the processor 210 sequentially performs operations 840, 850, and 860. However, the disclosure is not limited thereto, and the processor 210 may perform operations 840, 850, and 860 in parallel. When the processor 210 performs operations 840, 850, and 860 in parallel, a function of the electronic device 300 can be performed by using a touch input, an input of the volume key 322, and voice recognition together.

The operations shown in FIG. 8 may be performed by a processor (e.g., the processor 120 of FIG. 1 or the processor 210 of FIG. 2) or a separate control circuit. For example, a memory (e.g., the memory 130 of FIG. 1 or the memory 240 of FIG. 2) of the electronic device may store instructions that, when executed, cause the processor 120 or 210 (or a control device) to perform at least some of the operations shown in FIG. 8.

An electronic device according to various embodiments of the disclosure may detect damage to a display and operate in an emergency use mode, so as to execute all or some functions of the electronic device even when the display is damaged.

An electronic device (e.g., the electronic device 101 of FIG. 1 or the electronic device 200 of FIG. 2) according to various embodiments of the disclosure may include a display module (e.g., the display module 160 of FIG. 1 or the display module 220 of FIG. 2), a communication circuit (e.g., the communication module 190 of FIG. 1 or the communication module 230 of FIG. 2), a processor (e.g., the processor 120 of FIG. 1 or the processor 210 of FIG. 2), and a memory (e.g., the memory 130 of FIG. 1 or the memory 240 of FIG. 2). The display module 160 or 220 may include a touch sensor, a display 222, and a display driver (e.g., the display driver 224 of FIG. 2). The processor 120 or 210 may be operatively connected to the display module 160 or 220 and the communication module 190 or 230. The memory 130 or 240 may be operatively connected to the processor 120 or 210. The memory 130 or 240 may store instructions which, when executed, cause the processor 120 or 210 to detect damage to the display 222, and when the damage to the display 222 is detected, output a user interface 510, 515, 520, 525, 530, 535, 540, 545, 550, 560, 565, or 610 through which a menu can be input even in a state in which the display 222 is damaged.

According to an embodiment, the electronic device may execute a guide on the damage to the display 222, and display, on the display 222, a first user interface 510, 515, 520, 525, 530, 535, 540, 545, 550, 560, 565, or 610 for identifying whether to continue using the electronic device 101 or 200 in a state in which the display 222 is damaged. When continued use of the electronic device 101 or 200 is determined, the electronic device may execute a function of the electronic device 101 or 200 in a state in which the display 222 is damaged.

According to an embodiment, the electronic device may execute a function of the electronic device 101 or 200, such as attempting a call, checking a call history, sending/receiving a message, and/or checking a message, in a state in which the display 222 is damaged.

According to an embodiment, the electronic device may include a sound output module and a speaker configured to output sound. The guide on the damage to the display 222 may include displaying a guide phrase on the display 222 and outputting a guide voice through the sound output module and the speaker.

According to an embodiment, the first user interface 510 may include at least one guide phrase for continued use of the electronic device 101 or 200 and a selection button for approving or rejecting continued use of the electronic device 101 or 200. The at least one guide phrase and the selection button may be displayed in at least a partial area of the display 222.

According to an embodiment, when an approval for continued use of the electronic device 101 or 200 is selected and thus continued use of the electronic device 101 or 200 is determined, the electronic device may display a second user interface 515 for confirming continued use of the electronic device 101 or 200 on the display 222.

According to an embodiment, when a rejection of continued use of the electronic device 101 or 200 is selected or a selection for continued use of the electronic device 101 or 200 is not input for a preconfigured period of time, the electronic device may identify whether any other previously connected electronic device 101 or 200 exists.

According to an embodiment, when the other previously connected electronic device 101 or 200 exists, the electronic device may connect to the other previously connected electronic device 101 or 200.

According to an embodiment, the electronic device may identify whether the other previously connected electronic device 101 or 200 has the display 222. When the other previously connected electronic device 101 or 200 does not have the display 222, the electronic device may execute a call function through the other previously connected electronic device 101 or 200.

According to an embodiment, the electronic device may identify whether the other previously connected electronic device 101 or 200 has the display 222. When the other previously connected electronic device 101 or 200 has the display 222, the electronic device may display an image, displayed on the display 222 of the electronic device 101 or 200, on the display 222 of the other previously connected electronic device 101 or 200.

According to an embodiment, the electronic device may execute a function of the electronic device 101 or 200, such as attempting a call, checking a call history, sending/receiving a message, and/or checking a message, through the other electronic device 101 or 200.

According to an embodiment, when the other previously connected electronic device 101 or 200 do not exist, the electronic device may divide a screen of the display 222 into a plurality of areas. The electronic device may display a plurality of touch areas in the plurality of areas and guide an order and positions of the touch areas through audio.

According to an embodiment, number buttons from 0 to 9 and function buttons for executing deletion and a call may be displayed in the plurality of touch areas. The electronic device 101 or 200 may be unlocked based on an input of a number and a function through the touch areas.

According to an embodiment, when unlocking of the electronic device 101 or 200 fails, the electronic device may attempt to unlock the electronic device 101 or 200 again by increasing the number of unlock attempts.

According to an embodiment, when unlocking of the electronic device 101 or 200 succeeds, the electronic device may identify whether a data cable connected to any other electronic device 101 or 200 is connected to the electronic device 101 or 200. When the data cable is connected to the electronic device 101 or 200, the electronic device may back up data of the electronic device 101 or 200 to the other electronic device 101 or 200.

According to an embodiment, when the data cable is connected to the electronic device 101 or 200, the electronic device 101 or 200 may be automatically unlocked.

According to an embodiment, the electronic device may output, through audio, an input of a number and a function through the touch areas.

According to an embodiment, when unlocking of the electronic device 101 or 200 succeeds, the electronic device may recognize an input of a volume key of the electronic device 101 or 200. The electronic device may execute a function of checking a call history and a call function of the electronic device 101 or 200, based on the recognition of the volume key of the electronic device 101 or 200.

According to an embodiment, the electronic device may include an audio module configured to recognize a user's voice. When unlocking of the electronic device 101 or 200 succeeds, the electronic device may recognize the user's voice to execute the function of checking a call history and the call function of the electronic device 101 or 200.

An electronic device (e.g., the electronic device 101 of FIG. 1 or the electronic device 200 of FIG. 2) according to various embodiments of the disclosure may include a display module (e.g., the display module 160 of FIG. 1 or the display module 220 of FIG. 2), a communication circuit (e.g., the communication module 190 of FIG. 1 or the communication module 230 of FIG. 2), a processor (e.g., the processor 120 of FIG. 1 or the processor 210 of FIG. 2), and a memory (e.g., the memory 130 of FIG. 1 or the memory 240 of FIG. 2). The display module 160 or 220 may include a touch sensor, a display 222, and a display driver (e.g., the display driver 224 of FIG. 2). The processor 120 or 210 may be operatively connected to the display module 160 or 220 and the communication module 190 or 230. The memory 130 or 240 may be operatively connected to the processor 120 or 210. The memory 130 or 240 may store instructions which, when executed, cause the processor 120 or 210 to detect damage to the display 222, when the damage to the display 222 is detected, identify whether any other previously connected electronic device 101 or 200 exists, when any other previously connected electronic device 101 or 200 exists, connect to the other previously connected electronic device 101 or 200, and output a user interface 510, 515, 520, 525, 530, 535, 540, 545, 550, 560, 565, or 610, through which a menu can be input, to the display 222 of the previously connected electronic device 101 or 200.

## Claims

1. An electronic device comprising:
a display module comprising a touch sensor, a display, and a display driver;
a communication module;
a processor operatively connected to the display module and the communication module; and
a memory operatively connected to the processor,
wherein the memory stores instructions which, when executed, cause the processor to:
detect damage to the display; and
in case that the damage to the display is detected, output a user interface through which a menu can be input even in a state in which the display is damaged.

2. The electronic device of claim 1, wherein the electronic device is configured to:
execute a guide on the damage to the display;
display, on the display, a first user interface for identifying whether to continue using the electronic device in the state in which the display is damaged; and
in case that continued use of the electronic device is determined, execute a function of the electronic device in the state in which the display is damaged.

3. The electronic device of claim 2, wherein the electronic device is configured to execute functions of the electronic device, including attempting a call, checking a call history, sending/receiving a message, and/or checking a message, in the state in which the display is damaged.

4. The electronic device of claim 2, comprising a sound output module and a speaker configured to output sound,
wherein the guide on the damage to the display comprises displaying a guide phrase on the display and outputting a guide voice through the sound output module and the speaker.

5. The electronic device of claim 1, wherein the first user interface comprises at least one guide phrase for continued use of the electronic device and a selection button for approving or rejecting continued use of the electronic device, and
wherein the at least one guide phrase and the selection button are displayed in at least a partial area of the display.

6. The electronic device of claim 5, wherein the electronic device is configured to, in case that an approval for continued use of the electronic device is selected and the continued use of the electronic device is determined, display a second user interface for confirming the continued use of the electronic device on the display.

7. The electronic device of claim 5, wherein the electronic device is configured to, in case that a rejection of continued use of the electronic device is selected or a selection for continued use of the electronic device is not input for a predetermined period of time, identify whether any other previously connected electronic device exists.

8. The electronic device of claim 7, wherein the electronic device is configured to, in case that any other previously connected electronic device exists, connect to the other previously connected electronic device.

9. The electronic device of claim 8, wherein the electronic device is configured to:
identify whether the other previously connected electronic device has a display; and
in case that the other previously connected electronic device does not have a display, execute a call function through the other previously connected electronic device.

10. The electronic device of claim 8, wherein the electronic device is configured to:
identify whether the other previously connected electronic device has a display; and
in case that the other previously connected electronic device has a display;
display an image, which is displayed on the display of the electronic device, on the display of the other previously connected electronic device.

11. The electronic device of claim 10, wherein the electronic device is configured to execute functions of the electronic device, including attempting a call, checking a call history, sending/receiving a message, and/or checking a message, through the other electronic device.

12. The electronic device of claim 7, wherein the electronic device is configured to:
in case that any other previously connected electronic device does not exist, divide a screen of the display into a plurality of areas; and
display a plurality of touch areas in the plurality of areas and guide an order and positions of the touch areas through audio.

13. The electronic device of claim 12, wherein number buttons from 0 to 9 and function buttons for executing deletion and a call are displayed in the plurality of touch areas, and
wherein the electronic device is unlocked based on an input of a number and a function through the touch areas.

14. The electronic device of claim 13, wherein the electronic device is configured to, in case that unlocking of the electronic device fails, reattempt to unlock the electronic device by increasing a number of unlock attempts.

15. The electronic device of claim 13, wherein the electronic device is configured to:
in case that unlocking of the electronic device succeeds, identify whether a data cable connected to any other electronic device is connected to the electronic device; and
in case that the data cable is connected to the electronic device, back up data of the electronic device to the other electronic device.
